(19) Europäisches Patentamt
European Patent Office
Office européen des brevets

(11) **EP 2 254 297 A1**

(12) **EUROPEAN PATENT APPLICATION**

(43) Date of publication:
**24.11.2010 Bulletin 2010/47**

(51) Int Cl.:
***H04L 27/00*** *(2006.01)* ***H04L 1/00*** *(2006.01)*

(21) Application number: **09305458.3**

(22) Date of filing: **19.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Thomson Licensing**
**92130 Issy-les-Moulineaux (FR)**

(72) Inventors:
• **Schmitt, Dirk**
**78052 Pfaffenweiler (DE)**

• **Falaise, Etienne**
**78050 Villingen-Schwenningen (DE)**
• **Kabutz, Marten**
**78048 Villingen-Schwenningen (DE)**

(74) Representative: **Thies, Stephan**
**Deutsche Thomson OHG**
**European Patent Operations**
**Karl-Wiechert-Allee 74**
**30625 Hannover (DE)**

(54) **Method and apparatus for physical layer header detection**

(57) The present invention relates to a method and apparatus for decoding a data stream. According to the invention, the method (1500) comprises receiving (1504) the data stream. A determination (1506) of whether the data stream was encoded according to a first pattern having a first dependency of data positions in the data stream or a second pattern having a second dependency of data positions in the data stream is attempted. The method further includes decoding (1508) a status information about the data stream using the first dependency of data positions in the data stream if the first pattern is detected and decoding (1510) the status information about the data stream using the second dependency of data positions in the data stream if the second pattern is detected. The method according to the invention further includes decoding (1512) the data stream according to the status information if the first pattern or the second pattern is detected.

FIG. 15

**Description**

The present invention relates to the field of data transmission. In particular, exemplary embodiments of the present invention relate to detecting a physical layer header in a data stream.

In transmission systems such as DVB-S2 systems, a so-called Physical Layer header or PL header is included in the DVB-S2 signal. The PL header includes parameters that describe the DVB-S2 stream. These parameters may include pilots on/off, forward error correction or FEC code rate and FEC length to name just a few examples. In DVB-S2, transponder parameters are allowed to vary for free-to-air applications, hence the PL header needs to be captured before the receiver can start to decode the DVB-S2 stream.

The PL header is first encoded with a special Physical Layer Signaling code or PLS code. The scheme used to encode the PL header is typically a feed forward encoding scheme. A modulation technique typically known as $\pi/2$ binary phase shift keying, abbreviated as BPSK herein, modulates an encoded bitstream. The PL header is merged to the DVB-S2 stream.

In known systems, the DVB-S2 PL header is captured by using coherent detection, where the PL header is demodulated bit by bit using a slicer. The sync pattern is then detected by using a bit comparator that generates a sync strobe signal if the current bitstream signal matches with known sync sequences. If the sync is detected, the following 64 decoded bits are routed to a Reed Müller decoder.

A disadvantage of coherent header detection is that timing and phase information needs to be determined before the PL header can be processed. Another disadvantage with known systems is that code information is typically not used for improving the detector performance.

International Patent Application Publication No. WO 2007/0011345 to Orlik, et al. purports to disclose a method, apparatus, and system for modulating and demodulating signals compatible with multiple receiver types. The disclosure states that it provides systems designed for improved receiver performance. The disclosure relates to the use of hybrid impulse radio ultra-wideband with forward error correction coding, recursive modulation and other techniques designed to enable one transmitter to transmit a waveform capable of being demodulated concurrently by a coherent receiver, a differentially coherent receiver, and/or a non-coherent receiver.

Raghavan, A.R., Baum, C.W., Noneaker, D.L., "Analysis of a Serial Acquisition Scheme for Unslotted Distributed Direct-Sequence Packet Radio Networks", IEEE International Conference on Communications, Conference Record, Affiliated with SUPERCOMM'98 (Cat. No.98CH36220), Pt. vol. 3, pp. 1248-1252, IEEE, USA, June 1998 purports to investigate the problem of acquisition in unslotted distributed direct-sequence packet radio networks. A non-coherent serial acquisition scheme is considered that uses passive matched filters to detect packet headers. A Gaussian approximation is derived to model the effects of multiple-access interference during acquisition. This approximation takes into account oscillator inaccuracies and Doppler shifts, and its validity depends only on the presence of a sufficient number of chips in the acquisition header. In particular, the accuracy of the approximation is not contingent on the presence of a large number of equal-power interferers. False alarm processing is modelled and a simple expression for the probability of acquisition is derived. The problem of threshold selection is considered and it is shown that a single threshold can be chosen to provide acceptable performance in a wide range of channel conditions.

Wiederholt, B.R., Bianco, M.A., "Phase Estimation Algorithm for Frequency Hopped Binary PSK and DPSK Waveforms with Small Number of Reference Symbols", MILCOM 2005, 2006 IEEE Military Communications Conference, IEEE Cat. No. 05CH37719, Pt. Vol. 2, pp. 845-850 Vol. 2, IEEE, USA, 2005 purports to disclose a system related to military satellite communication. The disclosed system uses frequency hopped waveforms. The disclosure states that it is difficult to coherently detect phase shift keying binary or M-ary signals unless many reference symbols are used to aid with phase estimation of the received signal. For this reason, many systems use differential phase modulations, such as differential phase shift keying or DPSK, which can be detected non-coherently without the use of phase information. However, the use of DPSK over PSK results in reduced power efficiency. The paper purports to present an approach to phase estimation that provides improved power efficiency through coherent detection of phase modulated signals, with and without differential encoding, using few reference symbols. More specifically, the algorithm presented is described as using signal processing techniques to estimate the phase of each hop by using both reference and information symbols in a hop. The paper relates to binary PSK and DPSK waveforms where data is transmitted in blocks with only one or two reference symbols per block. The performance of this algorithm was purportedly evaluated for the case of additive white Gaussian noise and Rayleigh fading channels via Monte Carlo simulations. At bit error rates of interest, the results indicate that, depending on the environment and modulation used, performance gains of up to 3 dB were allegedly realized when hops contain as few as two reference symbols. The paper states that the results described therein show that coherent detection of binary phase shifting keying and DPSK modulated waveforms containing one reference symbol per hop performed more efficiently than non-coherent detection in all channels considered.

An improved way to detect a PL header in a data stream is desirable.

A method of decoding a data stream according to the invention is recited in claim 1. The method comprises receiving the data stream. A determination of whether the data stream was encoded according to a first pattern having a first dependency of data positions in the data stream or a second pattern having a second dependency of data positions in the data stream is attempted. In this, the notion of "dependency of data positions" relates to bit stream data at specific positions relative or neighbring to each other being related in a specific or deterministic way. The method further includes decoding a status information about the data stream using the first dependency of data positions in the data stream if the first pattern is detected, and decoding the status information about the data stream using the second dependency of data positions in the data stream if the second pattern is detected. The method according to the invention further includes decoding the data stream according to the status information if the first pattern or the second pattern is detected.

According to the invention, the first pattern may comprise whether the data stream was encoded in a pilots_ on state. The second pattern may comprise whether the data stream was encoded in a pilots_off state. Moreover, the first dependency of data positions may comprise including an even data bit that is an inversion of a preceding odd data bit in the data stream. The second dependency of data positions may comprise including an even data bit that is the same as a preceding odd data bit in the data stream.

The first dependency and the second dependency may comprise dependencies in a Physical Layer Signaling code used to encode the status information, according to the invention. In addition, the method of decoding according to the invention may comprise a non-coherent mode of operation. The method may comprise correlating a sync pattern in the data stream.

A method according to the invention may comprise decoding the data stream in a coherent mode of operation if the attempt to determine whether the data stream was encoded according to the first pattern or the second pattern is unsuccessful. The coherent mode of operation may comprise removing carrier frequency and phase offset information from the data stream.

An apparatus for decoding a data stream according to the invention is recited in claim 11. The apparatus comprises a tuner that is adapted to receive an analog signal corresponding to the data stream and an analog-to-digital convertor that is adapted to convert the analog signal into a sequence of sampled values corresponding to the data stream. An apparatus according to the invention may additionally comprise a detector that is adapted to attempt to determine whether the data stream was encoded according to a first pattern having a first dependency of data positions in the data stream or a second pattern having a second dependency of data positions in the data stream. In this, the notion of "dependency of data positions" relates to bit stream data at specific positions relative or neighbring to each other being related in a specific or deterministic way. Finally, an apparatus according to the invention may comprise a decoder that is adapted to decode the data stream based on the status information if it is determined that the first pattern or the second pattern was used to encode the data.

In an apparatus according to the invention, the first pattern may comprise whether the data stream was encoded in a pilots_on state. The second pattern may comprise whether the data stream was encoded in a pilots_off state. The first dependency of data positions may comprise including an even data bit that is an inversion of a preceding odd data bit in the data stream. Finally, the second dependency of data positions may comprise including an even data bit that is the same as a preceding odd data bit in the data stream.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.

**Fig. 1**    shows a block diagram of a header receiver in accordance with an exemplary embodiment of the present invention.

**Fig. 2**    shows a block diagram of a header receiver operating in a non-coherent detection mode in accordance with an exemplary embodiment of the present invention.

**Fig. 3**    shows a block diagram of a header receiver operating in a non-coherent detection mode in accordance with an exemplary embodiment of the present invention.

**Fig. 4**    shows a diagram showing an odd symbol constellation and an even symbol constellation in accordance with an exemplary embodiment of the present invention.

**Fig. 5**    shows a diagram of a symbol constellation that is useful in explaining a decoding operation in accordance with an exemplary embodiment of the present invention.

**Fig. 6**    shows a second diagram of a symbol constellation that is useful in explaining a decoding operation in accordance with an exemplary embodiment of the present invention.

**Fig. 7**    shows a trellis diagram that is useful in explaining the processing of even symbols in accordance with an exemplary embodiment of the present invention.

Fig. 8        shows a block diagram of a demodulator in accordance with an exemplary embodiment of the present invention.

Fig. 9        shows a first trellis diagram representing a pilots_off state condition and a second trellis diagram representing a pilots_on state condition in accordance with an exemplary embodiment of the present invention.

Fig. 10      shows a block diagram of a header receiver operating in a coherent detection mode in accordance with an exemplary embodiment of the present invention.

Fig. 11      shows a block diagram of a header receiver operating in a coherent detection mode in accordance with an exemplary embodiment of the present invention.

Fig. 12      shows a block diagram of a header receiver operating in a coherent detection mode in accordance with an exemplary embodiment of the present invention.

Fig. 13      shows a diagram useful in explaining PLS code dependencies in accordance with an exemplary embodiment of the present invention.

Fig. 14      shows a diagram of a symbol constellation that is useful in explaining the use of redundant pilot bit information to improve detector performance in accordance with an exemplary embodiment of the present invention.

Fig. 15      shows a process flow diagram showing a method of decoding a data stream in accordance with an exemplary embodiment of the present invention.

Exemplary embodiments of the present invention relate to a digital solution for capturing the PL header of a digital data stream in both a coherent mode and a non-coherent mode. Detector performance in either the non-coherent mode or the coherent mode is improved by exploiting the encoding properties of the $\pi/2$ modulated BPSK signal. In particular, the arrangement of bits as even/odd symbols in a $\pi/2$ modulated BPSK signal relates to whether pilots are on or off, i.e. whether the detector is in the pilots_on state or in the pilots_off state. As used herein, a $\pi/2$ modulated BPSK signal is made up of even/odd symbols that comprise $\pi/2$ modulated BPSK even/odd bits. An exemplary embodiment of the present invention exploits the fact that, in a $\pi/2$ modulated BPSK signal, every even data bit is the same as the immediately preceding odd data bit when pilots are off, and the fact that every even data bit is the inverse of the immediately preceding odd data bit if pilots are on. Moreover, these facts may be used to enlarge the distance between the slicer points of the $\pi/2$ BPSK.

An exemplary embodiment of the present invention provides a non-coherent detection scheme which allows demodulation of the PL header before the frequency and the phase of the carrier are known. In so doing, a sync correlator uses differential decoding. A decoder in accordance with an exemplary embodiment of the present invention uses differential decoding for non-coherent decoding and improves the bit decision for the PL header using PLS code dependencies. As set forth below, a pilot detector uses the dependencies of the PLS code to detect whether or not the DVB-S2 stream includes pilots.

If an attempt to decode the PL header in the non-coherent mode fails, for example because of too many errors, the PL header may be detected in a coherent mode. In the coherent mode, the symbols may be used directly for demapping. A metric calculation employing, for example, a Manhattan or Euclidian distance of each symbol, may be used to make a decision. Decision making may be improved using inherent properties of the configuration of data in the bit stream depending on whether the bit stream is using pilot bits or not, as fully set forth below.

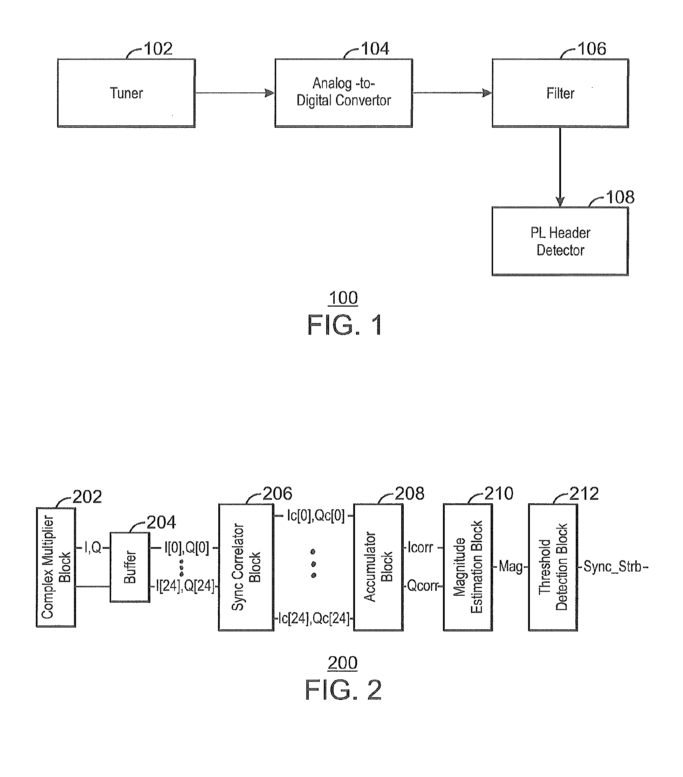

Fig. 1 shows a block diagram of a header receiver 100 in accordance with an exemplary embodiment of the present invention. In one exemplary embodiment of the present invention, the header receiver 100 is adapted to receive and decode a header from a DVB-S2 data stream.

The header receiver 100 comprises a tuner 102, which receives an analog signal corresponding to a data stream. The tuner 102 may receive the signal from a satellite dish or the like. The received signal is converted to a base band Cartesian I, Q signal by the tuner 102. The base band signal is delivered to an analog-to-digital convertor 104, which samples the received signal and converts it into corresponding digital data to allow for further digital signal processing. The analog-to-digital convertor 104 delivers the digital data to a filter 106, which filters the data before providing it to a PL header detector 108.

As set forth below, the header receiver 100 is adapted to operate in either a coherent mode or a non-coherent mode. In one exemplary embodiment of the present invention, decoding is first attempted in the non-coherent mode. If decoding in the non-coherent mode fails to successfully decode the header information, decoding in the coherent mode is performed. The coherent mode provides better performance for low SNR situations.

The two modes involve different processing steps. For example, when operating in the non-coherent mode, the header receiver performs DC offset cancellation, phase and gain balancing, anti-aliasing filtering, coarse frequency tracking, timing recovery and matched filtering before the digital data corresponding to the received signal is routed to the PL header detector 108. The skilled person will appreciate that the PL scrambling sequence is not described in detail herein because the associated steps are predefined and known.

**Fig. 2** shows a block diagram of a header receiver 200 operating in a non-coherent detection mode in accordance with an exemplary embodiment of the present invention. The header receiver 200 is adapted to recover the timing of an incoming DVB-S2 data stream and to detect the sync pattern. A distance between the two sync patterns is determined. A pilot bit is detected and a determination is made with regard to whether the pilot bit indicates that pilots are on or off for the data stream, with other words whether the pilots_on state or the pilots_off state is to be assumed. Thereafter, the PL identification bit stream is detected using a non-coherent demodulation process that employs PLS code dependencies.

A complex multiplier block 202 receives the incoming (I,Q) vector after the timing recovery. The (I,Q) vector is multiplied with the conjugate complex of the previous vector to provide a differential demodulation. The output of the complex multiplier block 202 is buffered in a buffer 204. In one exemplary embodiment of the present invention, the buffer 204 stores the last 25 output values of the complex multiplier block 202. These 25 (I,Q) vectors are delivered to a a sync correlator block 206, where they are correlated with known sign values of a sync pattern. This yields a set of 25 individual correlated vectors (Ic,Qc) which are forwarded to an accumulator block 208. The accumulator block 208 accumulates the individual correlated vectors (Ic,Qc) into an accumulated complex correlation (Icorr,Qcorr). The magnitude of the accumulated complex correlation is then estimated by a magnitude estimation block 210. Thereafter, a threshold detection block 212 generates a sync strobe signal Sync_Strb if the magnitude of the accumulated complex correlation value is larger than a given threshold.

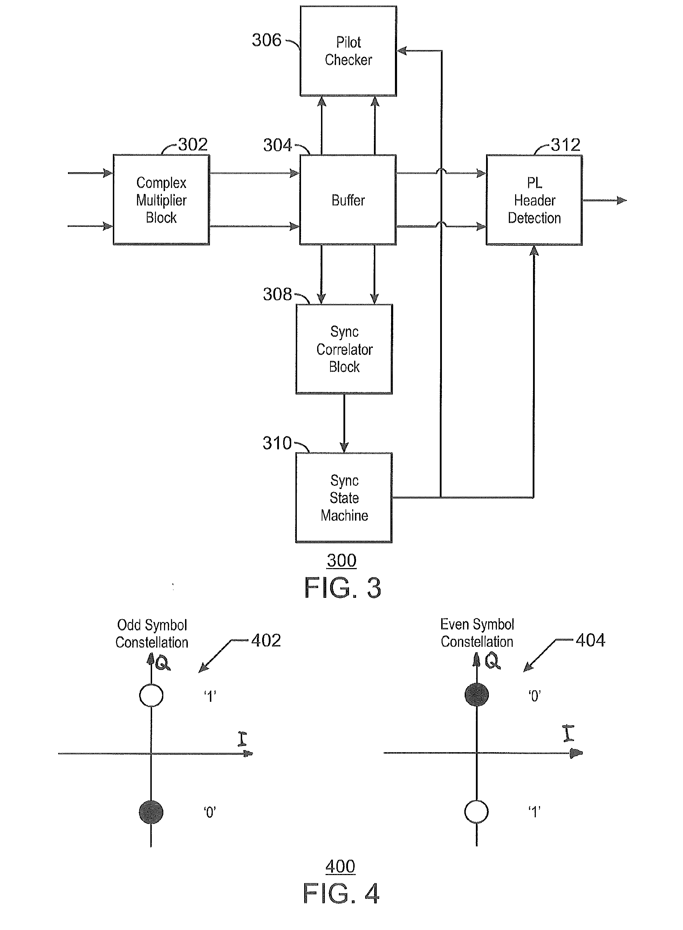

**Fig. 3** is a block diagram of a header receiver 300 operating in a non-coherent detection mode in accordance with an exemplary embodiment of the present invention. The header receiver shown in **Fig. 3** includes additional detail with respect to the header receiver 200 shown in **Fig. 2.** The header receiver 300 includes several components that are similar to the header receiver 200. In particular, the header receiver 300 comprises a complex multiplier block 302, a buffer 304 and a sync correlator 308, each of which operates as described above with reference to the header receiver 200 shown in **Fig. 2.**

The header receiver 300 includes a sync state machine 310 that locks to a sync strobe and comprises a fly wheel mechanism. In an exemplary embodiment of the present invention, the flywheel mechanism is adapted to insert a sync for the next decoding steps if a sync strobe is missed or to suppress a sync if a "ghost" sync occurs. Also included in the sync state machine 310 is a symbol counter, which reflects the current position in the DVB-S2 stream. As the DVB-S2 standard supports different modulation schemes, like 8-PSK, QPSK and H8PSK, the sync position differs. Therefore, an automatic adjustment is made by the sync state machine 310, which searches for the right modulation using the symbol counter value at two consecutive sync strobes.

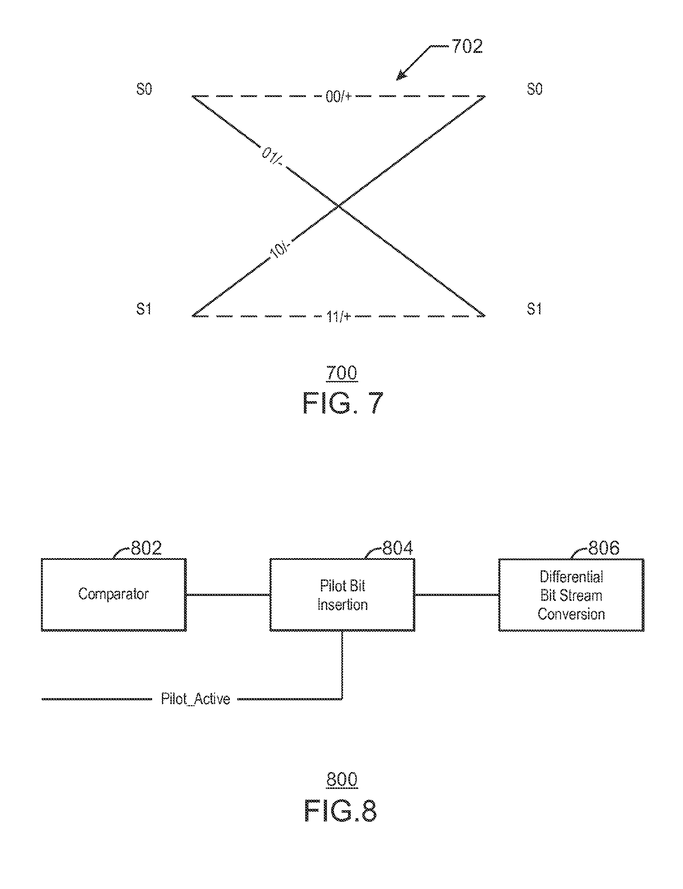

The output of the sync state machine 310 is delivered to the PL header detector 312 and to a pilot checker 306. The pilot checker 306 uses special dependencies in the PLS code for detecting whether the DVB-S2 stream being processed is employing pilots or not. In one exemplary embodiment of the present invention, the pilot checker 306 operates in accordance with a trellis diagram such as the trellis diagram shown in **Fig. 7** and described below. The PL header detector 312 uses buffered I,Q values stored in the buffer 304 to perform detection of the PL header information. The skilled person will appreciate that the non-coherent header receiver 300 may be employed in connection with all $\pi$/2 BPSK modulated signals to detect sync pattern and data which is encoded in the manner of a DVB-S2 stream.

**Fig. 4** is a diagram showing, in the (I,Q) complex number plane, an odd symbol constellation and an even symbol constellation in accordance with an exemplary embodiment of the present invention. In its left half, **Fig. 4** shows an odd symbol constellation 402, and in its right half, **Fig. 4** shows an even symbol constellation 404. According to the odd symbol constellation 402, a logical "1" is coded as (I=0, Q>0), and a logical "0" is coded as (I=0, Q<0). According to the even symbol constellation 404, a logical "1" is coded as (I=0, Q<0), and a logical "0" is coded as (I=0, Q>0). The odd symbol constellation 402 and the even symbol constellation 404 represent non-distorted output of the complex multiplier block 302 shown in **Fig. 3.**

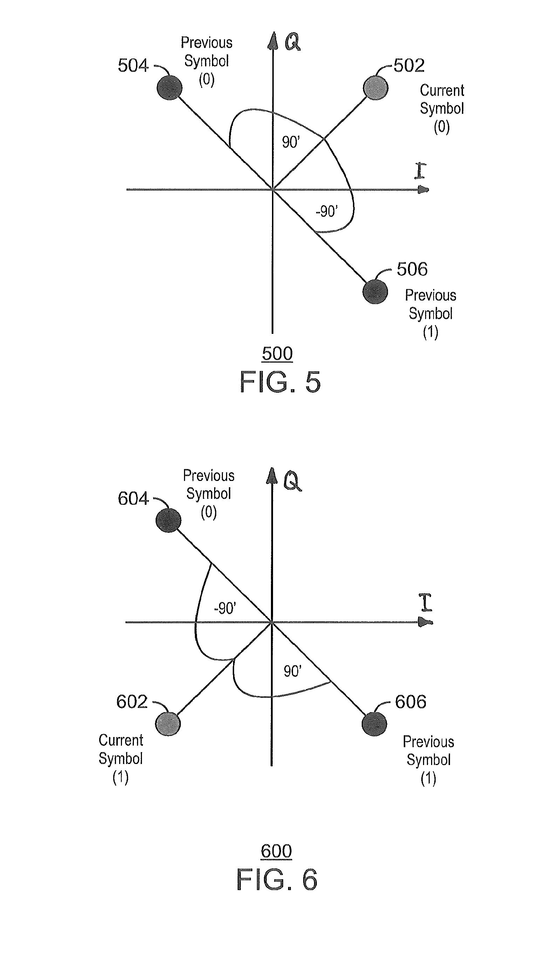

**Fig. 5** shows, in the (I,Q) complex number plane, a diagram 500 of a symbol constellation that is useful in explaining a decoding operation in accordance with an exemplary embodiment of the present invention. The diagram 500 includes a current symbol 502 that is being decoded. In the diagram 500, the current symbol 502 is assumed to be a logical "0", and it is represented by a received vector (I>0, Q>0).

In accordance with an exemplary embodiment of the present invention, a demodulator may be adapted to employ a technique to correlate the current symbol 502 with a previous symbol by using a complex multiplier. The previous symbol is passed directly to the complex multiplier block 302. The current symbol 502 is being conjugated, i.e.

its imaginary part is multiplied by -1, and is then passed to the complex multiplier block 302. In this manner, the previous and current symbols may be compared without any knowledge of the phase or frequency of the associated data stream. This technique exploits the fact that data in a π/2 BPSK data stream is rotated in time with π/2 between odd and even symbols. An example of such a constellation is shown in **Fig. 4.**

In the example shown in **Fig. 5,** the current symbol may be decoded by measuring the complex difference between the current symbol and the previous symbol. **Fig. 5** shows both possible cases, i.e. the case that the previous symbol is a logical "0" 504, represented by (I<0, Q>0), and the case that the previous symbold is a logical "1" 506, represented by (I>0, Q<0). If the previous symbol is a logical "0" 504, there is a positive 90 degree angle between the current symbol and the previous symbol. If the previous symbol is a logical "1" 506, there is a negative 90 degree angle between the current symbol and the previous symbol. The angle may be measured using the conjugate complex multiplication between the current symbol and the previous symbol.

**Fig. 6** is, in the (I,Q) complex number plane, a second diagram 600 of a symbol constellation that is useful in explaining a decoding operation in accordance with an exemplary embodiment of the present invention. The diagram 600 includes a current symbol 602 that is being decoded. In the diagram 600, the current symbol 602 is assumed to be a logical "1 ", and it is represented by a received vector (I<0, Q<0). In the example shown in **Fig. 6,** there is a negative 90 degree angle between the current symbol 602 and the previous symbol if the previous symbol is a logical "0" 604, and there is a positive 90 degree angle between the current symbol 602 and the previous symbol if the previous symbol is a logical "1" 606.

Based on the above discussion, the skilled person will appreciate the importance of knowing the logical value of the previous symbol. Moreover, bit errors may be propagated if the value of the previous symbol is incorrectly decoded. A differential decoder may be employed after the detection circuit to facilitate accurately identifying the value of the previous symbol. In one exemplary embodiment of the present invention, the detector circuit comprises a complex conjugate multiplier with a threshold detector. Detector performance may be improved by using pilot bits, which are included in every second symbol. Moreover, if it is known whether pilot bits are on or off, pilot symbols may be inserted using the methodology described below with reference to **Fig. 8.** Whether pilot bits are "on" or "off' may be determined using a pilot checker 306, as shown above with reference to **Fig. 3.**

**Fig. 7** shows a trellis diagram 700 that is useful in explaining the processing of even symbols in accordance with an exemplary embodiment of the present invention. The diagram 700 comprises a trellis 702. As set forth above, the trellis 702 may be employed by the pilot checker 306 to determine whether a particular DVB-S2 data stream is operating in a pilots_on state or a pilots_off state.

As represented in the trellis 702, the pilot checker 306 may be adapted to count positive Q-values and negative Q-values. The counted positive Q-values and the counted negative Q-values are compared to each other after a PL header sequence. The pilots_on state is detected if the count for the negative Q-values is larger than the count for the positive Q-values, with other words if there are more negative Q-values in the PL header sequence than there are positive Q-values, or with other words if the majority of Q-values in the PL header sequence is negative. Otherwise, the pilots_ off state is detected.

In one exemplary embodiment of the present invention, the trellis 702 is used for the even symbols coming from the complex multiplier 302 for detection. When the pilots_off state is detected, it is known that the input bits have been encoded such that in the modulated data each even bit is identical to the respective preceding odd bit, and the output of the complex multiplier 302 represents positive Q-values, as the differential angle is 90 degrees between even and odd bits for this modulation. When the pilots_on state is detected, it is known that the input bits have been encoded in such a way that in the modulated data the even bits are always the complement of the respective preceding odd bits, so the complex multiplier 302 outputs negative values, as the differential angle is -90 degrees between even and odd bits for this modulation.

**Fig. 8** shows a block diagram of a demodulator 800 in accordance with an exemplary embodiment of the present invention. The demodulator 800 comprises a comparator 802, a pilot bit insertion block 804 and a differential bit stream conversion block 806, which removes the uncertainty of the current symbol polarity. The comparator 802 compares incoming Q-values, as follows:

If q>0 then bit=1 else bit=0 , for odd symbols
If q<0 then bit=1 else bit=0 , for even symbols

In one exemplary embodiment of the present invention, the pilot bit insertion block 804 may be adapted to insert a pilot bit depending on PLS code dependencies for the bit stream. This inserted pilot bit may only be used if it is known whether there are pilots in the DVB-S2 stream. The inserted pilot bit may comprise a logical "1" for each even bit in the PL header if there are pilots, i.e. in the pilots_on state. The inserted pilot bit may comprise a logical "0" for each even bit if there are no pilots, i.e. in the pilots_off state.

If a DVB-S2 bit stream is being decoded in non-coherent mode, the differential bit stream coding block 806 may convert the differential bit stream coming for the comparator 802 after the insertion of the pilot bit using the feedback logic H(z)=1/(1⊕z).

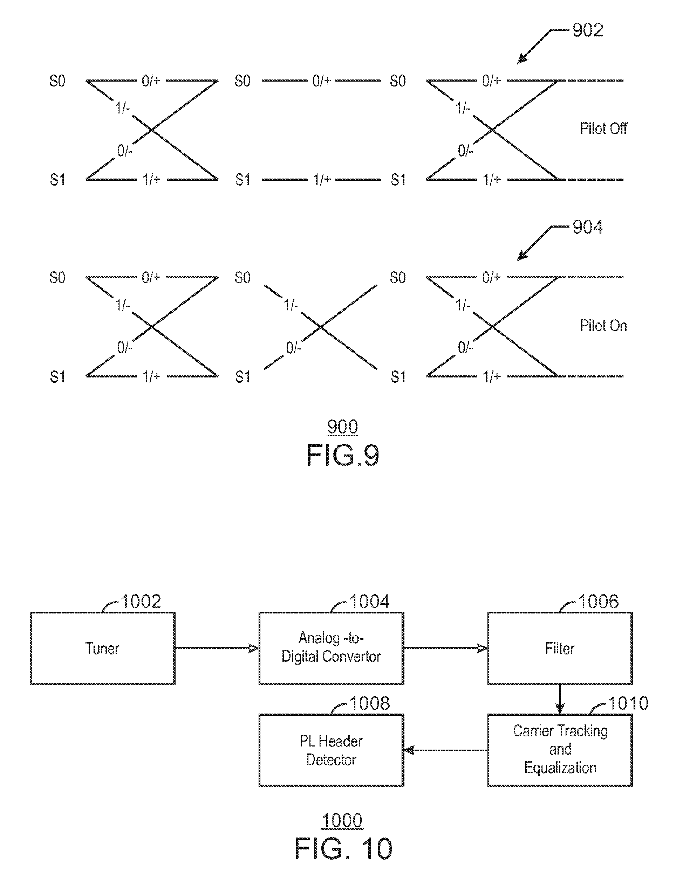

**Fig. 9** shows a first trellis diagram 902 representing the pilots_off state condition and a second trellis diagram 904 representing the pilots_on state condition in accordance with an exemplary embodiment of the present invention. To improve the decoder performance, the first trellis diagram 902 and the second trellis diagram 904 may be used. The skilled person will appreciate that the first trellis diagram 902 and the second trellis diagram 904 may be representative of a Viterbi decoding scheme.

A potential problem with differential non-coherent detection is that one wrong bit decision causes a propagation error. Therefore, an exemplary embodiment of the present invention comprises a method of performing coherent header detection if an attempt to decode the header in non-coherent mode fails. Moreover, the coherent mode of operation may include operation of a carrier tracking loop to remove the phase and frequency from the data stream.

**Fig. 10** is a block diagram of a header receiver 1000 operating in a coherent detection mode in accordance with an exemplary embodiment of the present invention. The header receiver 1000 includes several components that are similar to the header receiver 100. In particular, the header receiver 1000 comprises a tuner 1002, an analog-to-digital convertor 1004 and a filter 1006, each of which operates as described above with reference to the header receiver 100 shown in **Fig. 1.** The filter 1006 delivers the filtered digital data to a carrier tracking and equalization block 1010, which removes the carrier frequency and phase offset from the data. The carrier tracking and equalization block 1010 delivers the digital data to a PL header detector 1008.

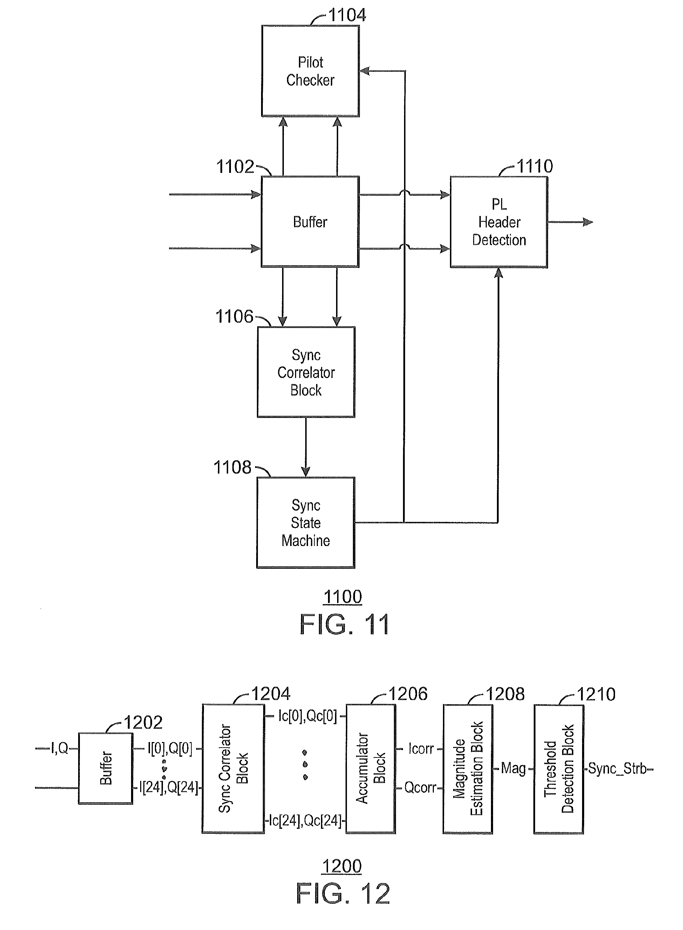

**Fig. 11** is a block diagram of a header receiver operating in a coherent detection mode in accordance with an exemplary embodiment of the present invention. The header receiver shown in **Fig. 11** is generally referred to by the reference number 1100. The header receiver 1100 comprises a buffer 1102, a pilot checker 1104, a sync correlator 1106 a sync state machine 1108 and a PL header detection block 1110.

In an exemplary embodiment of the present invention, the PL header detection block 1110 is adapted to recover the timing of the incoming DVB-S2 bit stream and to detect the sync pattern. The distance between two sync patterns is measured and the pilot bit is detected so that a determination may be made about whether pilots are on or off. Thereafter, the PL header bit stream is detected using coherent modulation that exploits PLS code dependencies.

**Fig. 12** is a block diagram of a header receiver operating in a coherent detection mode in accordance with an exemplary embodiment of the present invention. The header receiver shown in **Fig. 12** is generally referred to by the reference number 1200. The header receiver 1200 comprises a buffer 1202, a sync correlator block 1204, an accumulator block 1206, a magnitude estimation block 1208 and a threshold detection block 1210. The skilled person will appreciate that the coherent header receiver 1200 does not include a complex multiplier as do the non-coherent header receivers shown in **Fig. 2** and **Fig. 3.** In addition, the operation of the sync correlator block 1204 and the demodulation logic employed by the magnitude estimation block 1208 is fundamentally different from corresponding functional blocks of the non-coherent header receivers shown in **Fig. 2** and **Fig. 3.** By way of example, the sync correlator block 1204 uses a different pattern for sync correlation than the sync correlator blocks shown in **Fig. 2** and **Fig. 3.**

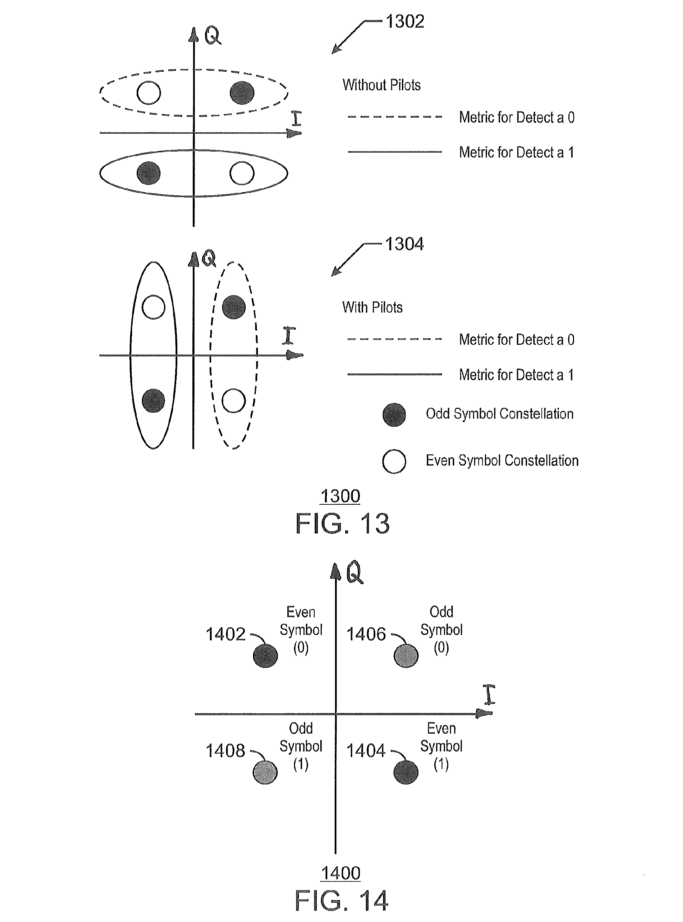

**Fig. 13** is, in the (I,Q) complex number plane, a diagram useful in explaining PLS code dependencies in accordance with an exemplary embodiment of the present invention. The diagram is generally referred to by the reference number 1300. Demodulation performed by the magnitude estimation block 1208 may operate according to a "without pilots" configuration 1302 appropriate for the pilots_off state, and/or according to a "with pilots" configuration 1304 appropriate for the pilots_on state. The "without pilots" configuration 1302 shows the distance calculation of the current odd, even symbol pair if there are no pilots in the DVB-S2 stream. The "with pilots" configuration 1304 shows the distance calculation of the current odd, even symbol pair if there are pilots in the DVB-S2 stream. A distance metric is then used to detect the PL header odd bit, using the following operation:

If ([metric0(2t+1) + metric0(2t)]> [metric1(2t+1) + metric1(2t)]) then bit=0 else bit=1 , if pilot are off and t=1...32

If ([metric0(2t+1) + metric1(2t)]> [metric1(2t+1) + metric0(2t)]) then bit=0 else bit=1 , if pilot are on and t=1...32

Metric calculation may be improved by accumulating the metric of an even symbol m(2t) and the successive odd symbol m(2t+1). This can be done because the even symbol is directly correlated with the successive odd symbol due to the formula:

$$y(2t) \quad = x(2t,s)$$

y(2t+1) = x(2t,s) xor pilot , where s means the bit value 0 or 1.

Moreover, if it is known whether the pilots are on, e.g., pilot=1, or off, e.g. pilot=0, the above formulas may be used to improve the detectability of x(2t). Therefore, it may be necessary to accumulate only the two metrics in the dashed oval in the "without pilots" configuration 1302 to get a metric improvement for detection of x(2t,0). The metrics shown in the solid oval of the "with pilots" configuration 1302 may be used to get the improved metric for x(2t,1). If the pilots are on, as in the "with pilots" configuration 1304, then metrics may be accumulated accordingly.

**Fig. 14** is, in the (I,Q) complex number plane, a diagram of a symbol constellation that is useful in explaining the use of redundant pilot bit information to improve detector performance in accordance with an exemplary embodiment of the present invention. The diagram is generally referred to by the reference number 1400. The diagram 1400 comprises a representation of an even symbol 1402 that is a logical "0", a representation of an even symbol 1404 that is a logical "1 ", a representation of an odd symbol 1406 that is a logical "0", and a representation of an odd symbol 1408 that is a logical "1".

The skilled person will appreciate that, when a data stream is encoded according to the DVB-S2 standard with pilots off i.e. in the pilots_off state, the even bits in the input data stream are repeated as the odd bits of the modulated data stream. In particular, the output data stream will in this case be created according to the following formula:

$$(y_1, y_2, \ldots, y_{63}, y_{64}) = (x_1, x_1, \ldots, x_{32}, x_{32})$$

Moreover, the even input bits in the input data stream are those input bits having even subscripts and the odd bits are those bits having odd subscripts.

If pilots are on, i.e. in the pilots_on state, the output data stream will be created according to the following formula:

$$(y_1, y_2, \ldots, y_{63}, y_{64}) = (x_1, !x_1, \ldots, x_{32}, !x_{32}), \text{ where } !x = not(x)$$

As above, the even input bits in the input data stream are those input bits having even subscripts and the odd bits are those bits having odd subscripts.

After this precoding, the bits are mapped to the $\pi/2$ BPSK to form a constellation such as the constellation shown in the diagram 1400. From the diagram 1400, it may be observed that metrics for an even symbol and an odd symbol must be accumulated because an even symbol is only a repetition of an odd symbol if the pilots are off. Moreover, the even symbol comprises an inverted repetition if the pilots are on. For the metric calculation, the Manhattan or the Euclidian distances may be used, for example. In the formula above, which only represents an accumulator and a comparator, a metric0 means that the current symbol bit is a logical "0" and a metric1 means that the current symbol bit is a logical "1".

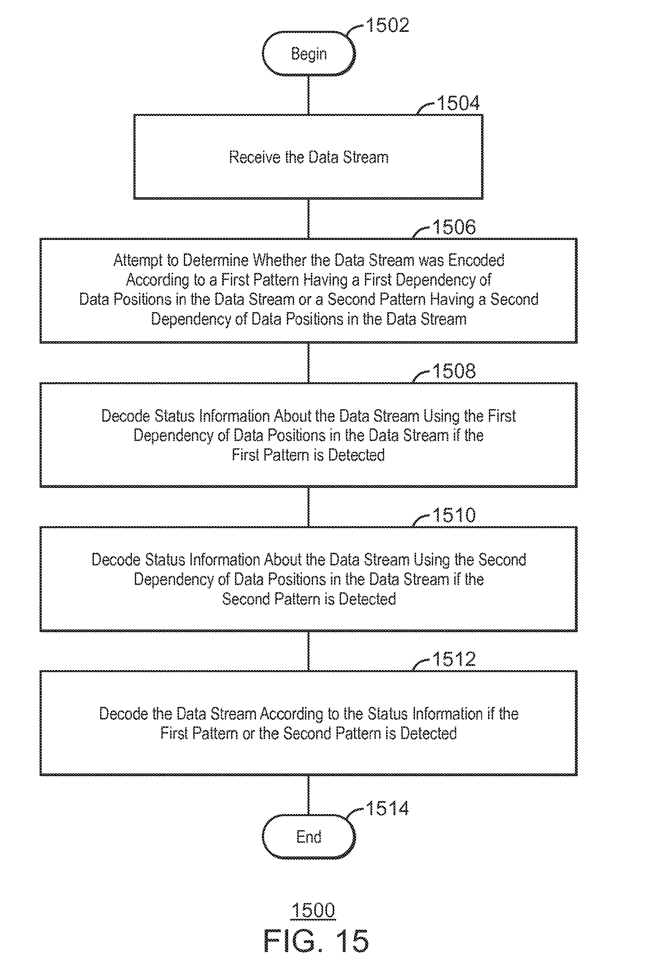

**Fig. 15** is a process flow diagram showing a method of decoding a data stream in accordance with an exemplary embodiment of the present invention. The method is generally referred to by the reference number 1500.

At block 1502, the method begins. At block 1504, the data stream is received. At block 1506, a determination of whether the data stream was encoded according to a first pattern having a first dependency of data positions in the data stream or a second pattern having a second dependency of data positions in the data stream is attempted. The status information is decoded using the first dependency of data positions in the data stream if the first pattern is detected, as shown at block 1508. The status information is decoded using the second dependency of data positions in the data stream if the second pattern is detected, as shown at block 1510. At block 1512, the data stream is decoded according to the status information if the first pattern or the second pattern is detected. At block 1514, the process ends.

The skilled person will appreciate that combining any of the above-recited features of the present invention together may be desirable.

**Claims**

**1.** Method (1500) of decoding a data stream, comprising:

- receiving (1504) the data stream;
- attempting (1506) to determine whether the data stream was encoded according to a first pattern having a first dependency of data positions in the data stream or according to a second pattern having a second dependency of data positions in the data stream;
- decoding (1508) a status information about the data stream using the first dependency of data positions in the data stream if the first pattern is detected;
- decoding (1510) the status information about the data stream using the second dependency of data positions in the data stream if the second pattern is detected; and
- decoding (1512) the data stream according to the status information if the first pattern or the second pattern is detected.

2. Method (1500) of decoding a data stream according to claim 1, wherein the first pattern comprises whether the data stream was encoded in a pilots_on state.

3. Method (1500) of decoding a data stream according to claim 1 or claim 2, wherein the second pattern comprises whether the data stream was encoded in a pilots_off state.

4. Method (1500) of decoding a data stream according to any preceding claim, wherein the first dependency of data positions comprises that the data stream includes an even data bit that is an inversion of a preceding odd data bit.

5. Method (1500) of decoding a data stream according to any preceding claim, wherein the second dependency of data positions comprises that the data stream includes an even data bit that is the same as a preceding odd data bit.

6. Method (1500) of decoding a data stream according to any preceding claim, wherein the first dependency and the second dependency comprise dependencies in a Physical Layer Signaling code used to encode the status information.

7. Method (1500) of decoding a data stream according to any preceding claim, wherein the method (1500) of decoding comprises a non-coherent mode of operation.

8. Method (1500) of decoding a data stream according to claim 7, comprising correlating a sync pattern in the data stream.

9. Method (1500) of decoding a data stream according to claim 7, comprising decoding the data stream in a coherent mode of operation if the attempt to determine whether the data stream was encoded according to the first pattern or the second pattern is unsuccessful.

10. Method (1500) of decoding a data stream according to claim 9, comprising removing carrier frequency and phase offset information from the data stream.

11. Apparatus (100, 1000) for decoding a data stream, comprising:

- a tuner (102, 1002) that is adapted to receive an analog signal corresponding to the data stream;
- an analog-to-digital convertor (104, 1004) that is adapted to convert the analog signal into a sequence of sampled values corresponding to the data stream;
- a detector (108, 1008) that is adapted to attempt to determine whether the data stream was encoded according to a first pattern having a first dependency of data positions in the data stream or according to a second pattern having a second dependency of data positions in the data stream; and
- a decoder that is adapted to decode the data stream based on the status information if it is determined that the first pattern or the second pattern was used to encode the data.

12. Apparatus (100, 1000) for decoding a data stream according to claim 11, wherein the first pattern comprises whether the data stream was encoded in a pilots_on state.

13. Apparatus (100, 1000) for decoding a data stream according to claims 11 or 12, wherein the second pattern comprises whether the data stream was encoded in a pilots_off state.

14. Apparatus (100, 1000) for decoding a data stream according to claims 11, 12 or 13, wherein the first dependency of data positions comprises that the data stream includes an even data bit that is an inversion of a preceding odd data bit.

15. Apparatus (100, 1000) for decoding a data stream according to claims 11, 12, 13 or 14, wherein the second dependency of data positions comprises that the data stream includes an even data bit that is the same as a preceding odd data bit.

Tuner ‑102

Analog ‑to‑ Digital Convertor ‑104

Filter ‑106

PL Header Detector ‑108

100

FIG. 1

Complex Multiplier Block ‑202

Buffer ‑204

Sync Correlator Block ‑206

Accumulator Block ‑208

Magnitude Estimation Block ‑210

Threshold Detection Block ‑212

I,Q

I[0],Q[0]

I[24],Q[24]

Ic[0],Qc[0]

Ic[24],Qc[24]

Icorr

Qcorr

Mag

Sync_Strb

200

FIG. 2

306 — Pilot Checker

302 — Complex Multiplier Block

304 — Buffer

312 — PL Header Detection

308 — Sync Correlator Block

310 — Sync State Machine

300

FIG. 3

Odd Symbol Constellation — 402

'1'

'0'

Even Symbol Constellation — 404

'0'

'1'

400

FIG. 4

504 — Previous Symbol (0)

502 — Current Symbol (0)

90'

-90'

506 — Previous Symbol (1)

500

FIG. 5

604 — Previous Symbol (0)

-90'

90'

602 — Current Symbol (1)

606 — Previous Symbol (1)

600

FIG. 6

700

FIG. 7

800

FIG.8

S0 ——— 0/+ ———          S0 ——— 0/+ ——— S0          S0 ——— 0/+ ———
    1/-                                                    1/-
    0/-                                                    0/-                Pilot Off
S1 ——— 1/+ ———          S1 ——— 1/+ ——— S1          S1 ——— 1/+ ———

                                                                          902

S0 ——— 0/+ ———          S0                 S0          S0 ——— 0/+ ╌╌╌
    1/-                      1/-                            1/-
    0/-                      0/-                            0/-                Pilot On
S1 ——— 1/+ ———          S1                 S1          S1 ——— 1/+ ╌╌╌

                                                                          904

<u>900</u>

FIG.9

| 1002 | 1004 | 1006 |
|------|------|------|
| Tuner | Analog -to-Digital Convertor | Filter |

| 1008 | 1010 |
|------|------|
| PL Header Detector | Carrier Tracking and Equalization |

<u>1000</u>

FIG. 10

EP 2 254 297 A1

1100

FIG. 11

1200

FIG. 12

1302

Without Pilots

------------ Metric for Detect a 0

———————— Metric for Detect a 1

1304

With Pilots

------------ Metric for Detect a 0

———————— Metric for Detect a 1

⬤ Odd Symbol Constellation

◯ Even Symbol Constellation

1300

FIG. 13

1402 — Even Symbol (0)    1406 — Odd Symbol (0)

1408 — Odd Symbol (1)    1404 — Even Symbol (1)

1400

FIG. 14

1502

Begin

1504

Receive the Data Stream

1506

Attempt to Determine Whether the Data Stream was Encoded
According to a First Pattern Having a First Dependency of
Data Positions in the Data Stream or a Second Pattern Having a Second
Dependency of Data Positions in the Data Stream

1508

Decode Status Information About the Data Stream Using the First
Dependency of Data Positions in the Data Stream if the
First Pattern is Detected

1510

Decode Status Information About the Data Stream Using the Second
Dependency of Data Positions in the Data Stream if the
Second Pattern is Detected

1512

Decode the Data Stream According to the Status Information if the
First Pattern or the Second Pattern is Detected

1514

End

1500

FIG. 15

## EUROPEAN SEARCH REPORT

Application Number

EP 09 30 5458

**Europäisches Patentamt
European Patent Office
Office européen des brevets**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/152041 A1 (MEYER JACQUES [FR]) 26 June 2008 (2008-06-26) * abstract * * paragraph [0006] - paragraph [0009] * * paragraph [0052] - paragraph [0053] * * paragraph [0067] - paragraph [0068] * | 1-15 | INV. H04L27/00 H04L1/00 |
| X | WO 2008/136375 A (SONY CORP [JP]; MATSUMOTO HIDEYUKI [JP]; FUTAMI TETSUHIRO [JP]; MAKITA) 13 November 2008 (2008-11-13) * the whole document * | 1-15 | |
| Y | US 2006/067432 A1 (THESLING WILLIAM [US] ET AL) 30 March 2006 (2006-03-30) * paragraphs [0026], [0033], [0049] * * paragraph [0058] - paragraph [0060] * * paragraph [0092] - paragraph [0102] * * figures 1b,16 * | 1-15 | TECHNICAL FIELDS SEARCHED (IPC) H04L |
| Y | WO 2005/086729 A (NEXTNET WIRELESS INC [US]; DUNN ERIC J [US]; GRINDAHL MERVIN L [US]; B) 22 September 2005 (2005-09-22) * page 3, line 26 - line 34 * * page 6, line 13 - line 18 * * page 7, line 5 - line 9 * | 1-15 | |

-/--

The present search report has been drawn up for all claims

| Place of search | Date of completion of the search | Examiner |
|---|---|---|
| The Hague | 23 October 2009 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

Application Number

EP 09 30 5458

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Digital Video Broadcasting (DVB); Second generation framing structure, channel coding and modulation systems for Broadcasting, Interactive Services, News Gathering and other broadband satellite applications (DVB-S2); Final draft ETSI EN 302 307"<br>ETSI STANDARD, EUROPEAN TELECOMMUNICATIONS STANDARDS INSTITUTE (ETSI), SOPHIA ANTIPOLIS CEDEX, FRANCE,<br>vol. BC, no. V1.2.1,<br>1 April 2009 (2009-04-01), XP014043755<br>* page 28, paragraph 5.5 - page 31, paragraph 5.5.3; figure 13 * | 1-15 | |
| A | SUN F-W ET AL: "FRAME SYNCHRONIZATION AND PILOT STRUCTURE FOR SECOND GENERATION DVB VIA SATELLITES"<br>INTERNATIONAL JOURNAL OF SATELLITE COMMUNICATIONS, JOHN WILEY AND SONS, US,<br>vol. 22, no. 3,<br>1 January 2004 (2004-01-01), pages 319-339, XP008036682<br>ISSN: 0737-2884<br>* figures 5,6 *<br>* page 325 - page 326 * | 1-15 | TECHNICAL FIELDS SEARCHED (IPC) |
| A | US 2008/225996 A1 (VARE JANI [FI] ET AL) 18 September 2008 (2008-09-18)<br>* paragraphs [0040], [0078], [0080] *<br>* paragraph [0111] - paragraph [0113]; figures 13,17 * | 1,10 | |

-/--

The present search report has been drawn up for all claims

| Place of search | Date of completion of the search | Examiner |
|---|---|---|
| The Hague | 23 October 2009 | Pieper, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 09 30 5458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/054406 A (IPWIRELESS INC [US]; HOWARD PAUL [GB]; JONES ALAN EDWARD [GB]; PONNAMP) 18 May 2007 (2007-05-18) <br> * abstract; figure 8 * <br> * page 9, last paragraph - page 10, paragraph 3 * <br> * page 11, last paragraph - page 12, paragraph 1 * <br> ----- | 7-10 | |

TECHNICAL FIELDS
SEARCHED    (IPC)

The present search report has been drawn up for all claims

| Place of search | Date of completion of the search | Examiner |
|---|---|---|
| The Hague | 23 October 2009 | Pieper, Thomas |

EPO FORM 1503 03.82 (P04C01)

## ANNEX TO THE EUROPEAN SEARCH REPORT
## ON EUROPEAN PATENT APPLICATION NO.

EP 09 30 5458

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2009

| Patent document cited in search report | | Publication date | Patent family member(s) | | Publication date |
|---|---|---|---|---|---|
| US 2008152041 | A1 | 26-06-2008 | EP | 1940071 A1 | 02-07-2008 |
| WO 2008136375 | A | 13-11-2008 | JP | 4324886 B2 | 02-09-2009 |
| | | | JP | 2008278188 A | 13-11-2008 |
| US 2006067432 | A1 | 30-03-2006 | US | 2009028275 A1 | 29-01-2009 |
| WO 2005086729 | A | 22-09-2005 | AU | 2005220798 A1 | 22-09-2005 |
| | | | BR | PI0508408 A | 24-07-2007 |
| | | | CA | 2558240 A1 | 22-09-2005 |
| | | | CN | 101076986 A | 21-11-2007 |
| | | | EP | 1776793 A2 | 25-04-2007 |
| | | | JP | 2007528164 T | 04-10-2007 |
| | | | KR | 20070053655 A | 25-05-2007 |
| US 2008225996 | A1 | 18-09-2008 | AR | 065618 A1 | 17-06-2009 |
| WO 2007054406 | A | 18-05-2007 | CN | 101351982 A | 21-01-2009 |
| | | | EP | 1952570 A1 | 06-08-2008 |
| | | | JP | 2009516443 T | 16-04-2009 |
| | | | KR | 20080067707 A | 21-07-2008 |
| | | | US | 2007110140 A1 | 17-05-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20070011345 A, Orlik

**Non-patent literature cited in the description**

- **Raghavan, A.R. ; Baum, C.W. ; Noneaker, D.L.** Analysis of a Serial Acquisition Scheme for Unslotted Distributed Direct-Sequence Packet Radio Networks. *IEEE International Conference on Communications,* June 1998, vol. 3, 1248-1252

- **Wiederholt, B.R. ; Bianco, M.A.** Phase Estimation Algorithm for Frequency Hopped Binary PSK and DPSK Waveforms with Small Number of Reference Symbols. *MILCOM 2005, 2006 IEEE Military Communications Conference,* 2005, vol. 2, 845-850